# EUROPEAN PATENT APPLICATION

(11) **EP 4 770 148 A1**
(43) Date of publication of application: **01.07.2026**
(21) Application number: 24864425.4
(22) Date of filing: 23.08.2024
(51) Int. Cl.: H04W 4/08, H04W 72/0446

(54) **RESOURCE SCHEDULING METHOD AND COMMUNICATION APPARATUS**

(30) Priority: 13.09.2023 CN 202311182151
(71) Applicant: Huawei Technologies Co., Ltd., Shenzhen, Guangdong 518129 (CN)
(72) Inventor: LOU, Qunfang, Shenzhen, Guangdong 518129 (CN); WANG, Zhiying, Shenzhen, Guangdong 518129 (CN); WEN, Min, Shenzhen, Guangdong 518129 (CN)
(74) Representative: Thun, Clemens
(86) International application number: PCT/CN2024/114189
(87) International publication number: WO 2025/055702

(57) **Abstract**

This application discloses a resource scheduling method and a communication apparatus. A centralized node can group a plurality of terminal devices into at least two user groups based on measurement information of the plurality of terminal devices, and send grouping information of the user group to a corresponding processing node, to trigger the processing node to determine transmission resource information of each terminal device based on the measurement information of the terminal device in the user group, and the processing node does not need to consider information about another terminal device outside the user group. Because only the measurement information of the terminal device in the user group is considered, a processing delay of coordinated multipoint transmission/reception can be reduced, to improve performance of coordinated multipoint transmission/reception.

## Description

This application claims priority to Chinese Patent Application No. 202311182151.9, filed with the China National Intellectual Property Administration on September 13, 2023 and entitled "RESOURCE SCHEDULING METHOD AND COMMUNICATION APPARATUS", which is incorporated herein by reference in its entirety.

### TECHNICAL FIELD

Embodiments of this application relate to the communication field, and in particular, to a resource scheduling method and a communication apparatus.

### BACKGROUND

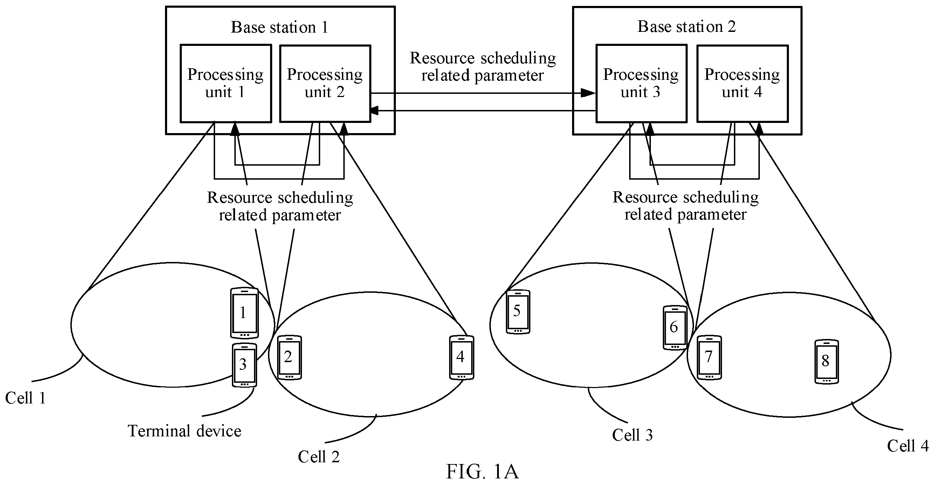

A coordinated multipoint transmission/reception (coordination of multi-points, CoMP) technology means that a plurality of transmission points that are geographically separated cooperatively participate in data transmission for a specific terminal device. For example, the plurality of transmission points cooperatively send data to a terminal device, or the plurality of transmission points jointly receive data sent by a terminal device. Depending on whether cells participating in CoMP processing belong to a same access network device, CoMP includes two manners: intra-site coordinated multipoint transmission/reception (Intra-site CoMP) and inter-site coordinated multipoint transmission/reception (Inter-site CoMP). As shown in FIG. 1A, for intra-site coordinated multipoint transmission/reception, resource scheduling related parameters related to CoMP processing need to be exchanged between processing units corresponding to cells inside a base station; and for inter-site coordinated multipoint transmission/reception, resource scheduling related parameters need to be exchanged between base stations, that is, information needs to be exchanged between processing units corresponding to cells of different base stations.

It can be learned that, for coordinated multipoint transmission/reception, information needs to be exchanged between processing units of a plurality of cells. Because a long delay is caused when information is exchanged between processing units, a processing delay of coordinated multipoint transmission/reception may be increased.

### SUMMARY

This application provides a resource scheduling method and a communication apparatus, to reduce a processing delay of coordinated multipoint transmission/reception.

According to a first aspect, this application provides a resource scheduling method. The resource scheduling method may be performed by a centralized node, and the centralized node may be an access network device or a part of functional modules or chips in the access network device. The centralized node is used as an example. The centralized node obtains measurement information of a plurality of terminal devices, where the measurement information indicates channel quality of the terminal device; the centralized node determines grouping information of at least two user groups based on the measurement information of the plurality of terminal devices, where grouping information of each user group indicates at least one terminal device included in the user group, and different user groups include different terminal devices; and the centralized node sends the grouping information of the user group to a processing node.

In this application, the centralized node can group the plurality of terminal devices into the at least two user groups, and send the grouping information of the user group to the corresponding processing node, to trigger the processing node to determine transmission resource information of each terminal device based on the measurement information of the terminal device in the user group, and the processing node does not need to consider information about another terminal device outside the user group. Because only the measurement information of the terminal device in the user group is considered, a processing delay of coordinated multipoint transmission/reception can be reduced, to improve performance of coordinated multipoint transmission/reception.

In a possible implementation, in the at least two user groups, a correlation degree between channels of any two terminal devices that belong to different user groups is less than a first threshold, and a correlation degree between channels of any two terminal devices that belong to a same user group is greater than a second threshold; and/or an interference degree between channels of any two terminal devices that belong to different user groups is less than a third threshold, and an interference degree between channels of any two terminal devices that belong to a same user group is greater than a fourth threshold.

It may be understood as that the centralized node groups terminal devices with a high correlation into one user group, and groups terminal devices with a low correlation into different user groups. The centralized node groups terminal devices with high interference degrees into one user group, and groups terminal devices with low interference degrees into different user groups.

In this embodiment, the centralized node groups the plurality of terminal devices, to obtain minimized inter-group interference and maximized intra-group interference of the at least two user groups, or a minimized inter-group correlation and a maximized intra-group correlation of the at least two user groups. Therefore, when determining transmission resource information of terminal devices in a same user group, only a channel state of a cell in which the terminal devices in the same user group are located needs to be considered, and a channel state of a cell in which a terminal device in another user group is located does not need to be considered.

In a possible implementation, that the centralized node determines the grouping information of the at least two user groups based on the measurement information of the plurality of terminal devices includes: The centralized node determines interference information and/or correlation information based on the measurement information of the plurality of terminal devices, and then the centralized node determines the grouping information of the at least two user groups based on the interference information and/or the correlation information. The interference information indicates an interference degree between channels of different terminal devices, and the correlation information indicates a correlation degree between channels of different terminal devices.

In a possible implementation, the grouping information of each user group includes an identifier of the user group and an identifier of the at least one terminal device included in the user group.

In a possible implementation, the processing node includes a processing unit corresponding to the user group, a same user group corresponds to one processing unit in the processing node, and the processing unit includes a processing unit corresponding to a cell in which the terminal device is located.

In this implementation, a same user group corresponds to one processing unit in the processing node. To be specific, grouping information of the same user group is sent only to one specific processing unit. In other words, a same processing unit calculates transmission resource information of a terminal device in one user group. This helps avoid data exchange between processing units.

In a possible implementation, the method further includes: The centralized node determines a first correspondence based on the grouping information of the at least two user groups, where the first correspondence indicates a correspondence between each of the at least two user groups and a processing unit corresponding to the user group, and the first correspondence includes an identifier of the user group and an identifier of the processing unit corresponding to the user group.

In a possible implementation, that the centralized node sends the grouping information of the user group to the processing node includes: The centralized node separately sends, based on the first correspondence, the grouping information of the user group corresponding to the processing unit and the identifier of the processing unit to the processing node in which the processing unit is located.

In this implementation, the centralized node stores a correspondence between a user group and a processing unit. This helps improve efficiency of distributing grouping information of the user group by the centralized node. In addition, when a terminal device included in the user group changes, the centralized node updates the grouping information of the user group for the processing unit.

In a possible implementation, the method further includes: The centralized node obtains attribute information of the processing unit corresponding to the cell in which the terminal device is located. That the centralized node determines the first correspondence based on the grouping information of the at least two user groups includes: The centralized node determines the first correspondence based on the grouping information of the at least two user groups and attribute information of a processing unit corresponding to each cell.

Optionally, the attribute information of the processing unit includes at least one of the following: an identifier of the cell corresponding to the processing unit; an identifier of the processing node in which the processing unit is located; a processing capacity of the processing unit; a storage capacity of the processing unit; and a type of a parameter that can be processed by the processing unit.

In this implementation, the centralized node determines, based on an attribute of the processing unit in the processing node, the processing unit corresponding to the user group, to match, for each user group, a processing unit that can support processing of resource scheduling related information of the user group, to help ensure processing efficiency of each processing unit.

According to a second aspect, this application provides a resource scheduling method. The resource scheduling method may be performed by a processing node, and the processing node may be an access network device or a part of functional modules or chips in the access network device. The processing node is used as an example. The processing node receives grouping information of at least one user group from a centralized node, where the grouping information of the user group indicates a terminal device that belongs to the user group, each user group includes at least one terminal device, and different user groups include different terminal devices; the processing node obtains measurement information of the terminal device in the user group; and the processing node determines transmission resource information of the terminal device in the user group based on the measurement information of the terminal device in the user group, where the transmission resource information indicates a resource parameter used when a serving cell in which the terminal device is located and a cooperating cell jointly transmit data to the terminal device.

In this application, the processing node can determine the transmission resource information of the terminal device in the user group based on the received grouping information of the user group by using the measurement information of the terminal device in the user group, and the processing node does not need to obtain information about another terminal device. Because a processing delay of the processing node is reduced, performance of coordinated multipoint transmission/reception is improved.

In a possible implementation, the transmission resource information includes a first resource parameter of a transceiver unit corresponding to the serving cell and a second resource parameter of a transceiver unit corresponding to the cooperating cell.

After the processing unit determines the transmission resource information of the terminal device in the user group based on the measurement information of the terminal device in the user group, the method further includes: The processing node controls the processing unit to transmit the first resource parameter to the transceiver unit corresponding to the serving cell, and transmit the second resource parameter to the transceiver unit corresponding to the cooperating cell, where the first resource parameter and the second resource parameter are used by the processing node to jointly transmit data to the terminal device with the transceiver unit of the serving cell and the transceiver unit of the cooperating cell.

In a possible implementation, in at least two user groups, a correlation degree between channels of any two terminal devices that belong to different user groups is less than a first threshold, and a correlation degree between channels of any two terminal devices that belong to a same user group is greater than a second threshold; and/or an interference degree between channels of any two terminal devices that belong to different user groups is less than a third threshold, and an interference degree between channels of any two terminal devices that belong to a same user group is greater than a fourth threshold.

In a possible implementation, grouping information of each user group includes an identifier of the user group and an identifier of the at least one terminal device included in the user group.

In a possible implementation, the processing node includes a processing unit corresponding to the user group, a same user group corresponds to one processing unit in the processing node, and the processing unit includes a processing unit corresponding to the cell in which the terminal device is located.

In a possible implementation, that the processing node determines the transmission resource information of the terminal device in the user group based on the measurement information of the terminal device in the user group includes: The processing node determines the transmission resource information of the terminal device in the user group based on the measurement information of the terminal device in the user group through the processing unit corresponding to the user group.

In a possible implementation, the method further includes: The processing node receives, from the centralized node, an identifier of a processing unit corresponding to each of the at least one user group.

In a possible implementation, the transmission resource information includes a first resource parameter of a transceiver unit corresponding to the serving cell and a second resource parameter of a transceiver unit corresponding to the cooperating cell. The method further includes: The processing node controls the processing unit to transmit the first resource parameter to the transceiver unit corresponding to the serving cell, and transmit the second resource parameter to the transceiver unit corresponding to the cooperating cell, where the first resource parameter and the second resource parameter are used by the processing node to jointly transmit data to the terminal device with the transceiver unit of the serving cell and the transceiver unit of the cooperating cell.

It should be noted that there are still a plurality of other specific implementations in this embodiment of this application. For details, refer to the specific implementations of the first aspect and beneficial effects thereof. Details are not described herein again.

According to a third aspect, an embodiment of this application provides a communication apparatus. The communication apparatus may be the centralized node in the foregoing implementations, or may be a chip in the centralized node. The communication apparatus may include a processing module and a transceiver module. When the communication apparatus is the centralized node, the processing module may be a processor, and the transceiver module may be a transceiver. The centralized node may further include a storage module, and the storage module may be a memory. The storage module is configured to store instructions, and the processing module executes the instructions stored in the storage module, to enable the centralized node to perform the method in the first aspect or any one of the implementations of the first aspect. When the communication apparatus is a chip in the centralized node, the processing module may be a processor, and the transceiver module may be an input/output interface, a pin, a circuit, or the like. The processing module executes instructions stored in a storage module, to enable the centralized node to perform the method in the first aspect or any one of the implementations of the first aspect. The storage module may be a storage module (for example, a register or a cache) in the chip, or may be a storage module (for example, a read-only memory or a random access memory) that is in the centralized node and that is located outside the chip.

According to a fourth aspect, an embodiment of this application provides a communication apparatus. The communication apparatus may be the processing node in the foregoing implementations, or may be a chip in the processing node. The communication apparatus may include a processing module and a transceiver module. When the communication apparatus is the processing node, the processing module may be a processor, and the transceiver module may be a transceiver. The processing node may further include a storage module, and the storage module may be a memory. The storage module is configured to store instructions, and the processing module executes the instructions stored in the storage module, to enable the processing node to perform the method in the second aspect or any one of the implementations of the second aspect. When the communication apparatus is the chip in the processing node, the processing module may be a processor, and the transceiver module may be an input/output interface, a pin, a circuit, or the like. The processing module executes instructions stored in the storage module, to enable the processing node to perform the method in the second aspect or any one of the implementations of the second aspect. The storage module may be a storage module (for example, a register or a cache) in the chip, or may be a storage module (for example, a read-only memory or a random access memory) that is in the processing node and that is located outside the chip.

According to a fifth aspect, this application provides a communication apparatus. The communication apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method described in any one of the first aspect or the second aspect, the implementations of the foregoing aspects, and the foregoing aspects.

According to a sixth aspect, an embodiment of this application provides a computer program product including instructions. When the instructions are run on a computer, the computer is enabled to perform the method described in any one of the first aspect or the second aspect, and the implementations of the foregoing aspects.

According to a seventh aspect, an embodiment of this application provides a computer-readable storage medium, including instructions. When the instructions are run on a computer, the computer is enabled to perform the method described in any one of the first aspect or the second aspect, and the implementations of the foregoing aspects.

According to an eighth aspect, an embodiment of this application provides a communication system. The communication system includes the centralized node in any one of the second aspect and the implementations of the second aspect, and the processing node in any one of the fourth aspect and the implementations of the fourth aspect.

### BRIEF DESCRIPTION OF DRAWINGS

FIG. 1A is an example diagram of a coordinated multipoint transmission/reception scenario in a conventional technology;
FIG. 1B is an example diagram of a coordinated multipoint transmission/reception scenario according to this application;
FIG. 2 is a schematic flowchart of a resource scheduling method according to this application;
FIG. 3 is an example diagram of a resource scheduling method according to this application;
FIG. 4 is a diagram of an embodiment of a communication apparatus according to this application;
FIG. 5 is a diagram of an embodiment of a communication apparatus according to this application; and
FIG. 6 is a diagram of an embodiment of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In the specification, claims, and accompanying drawings of this application, the terms "first", "second", "third", "fourth", and the like (if existent) are intended to distinguish between similar objects but do not necessarily indicate a specific order or sequence. It should be understood that the terminology termed in such a way are interchangeable in proper circumstances so that embodiments described herein can be implemented in other orders than the content illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

For ease of understanding, the following first describes a system architecture and an application scenario of a resource scheduling method provided in this application.

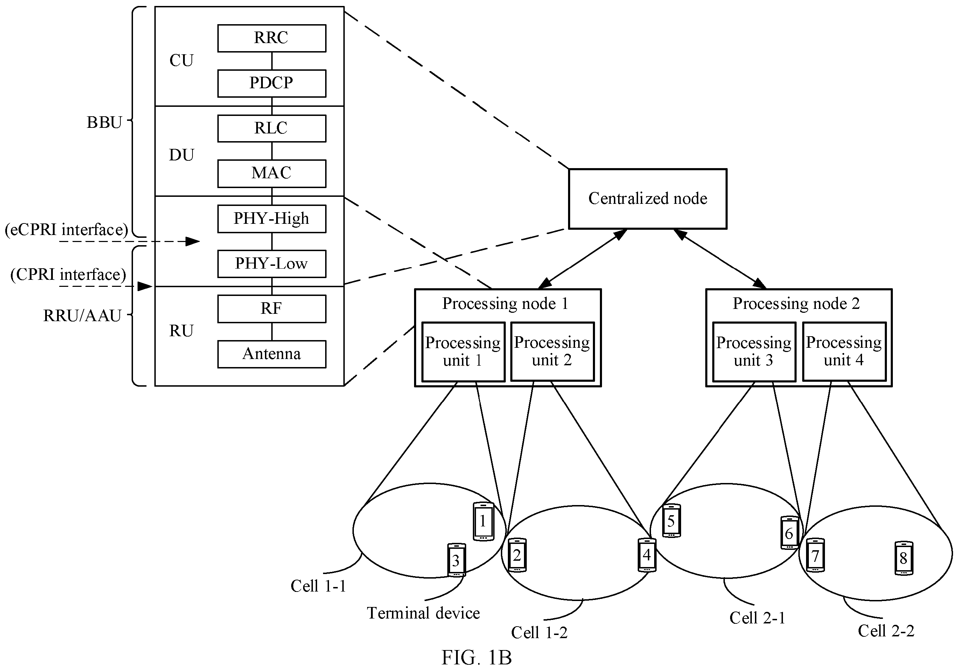

The resource scheduling method provided in this application is mainly applied to a CoMP scenario, for example, downlink CoMP such as coordinated scheduling/coordinated beamforming (coordinated scheduling/coordinated beamforming, CS/CB) and joint transmission (joint transmission, JT). For another example, uplink CoMP such as joint reception (joint reception, JR). As shown in FIG. 1B, this scenario mainly relates to a terminal device, a centralized node, and a processing node in a communication system. The communication system may be a long term evolution (long term evolution, LTE) system, a 5G NR (5G New Radio) system, a 6th generation (6th generation, 6G) mobile communication technology system, or a subsequent evolution standard. This is not limited in this application.

The terminal device includes a device that provides voice and/or data connectivity for a user in the foregoing communication system. For example, the terminal device may include a handheld device having a wireless connection function, or a processing device connected to a wireless modem. The terminal device may communicate with a core network (for example, a 4G core network (evolved packet core, EPC) or a 5G core network (5th generation core, 5GC)) via a radio access network (radio access network, RAN), and may exchange voice and/or data with the RAN. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile (mobile), a remote station (remote station), an access point (access point, AP), a remote terminal device (remote terminal), an access terminal device (access terminal), a user terminal device (user terminal), a user agent (user agent), a user device (user device), or the like. In addition, the terminal device may be a mobile phone (mobile phone), a tablet computer (Pad), a computer with a wireless transceiver function, a virtual reality (virtual reality, VR) device, an augmented reality (augmented reality, AR) device, an extended reality (extended reality, XR) service terminal, a cloud gaming (cloud gaming, CG) service terminal, a wireless terminal in industrial control, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like. It should be understood that a specific technology for and a specific device form of the terminal device are not limited in embodiments of this application. The terminal device in this application may be any one of the foregoing devices or chips. This is not specifically limited herein. Regardless of being used as the device or the chip, the terminal device can be manufactured, sold, or used as an independent product. In this embodiment and subsequent embodiments, the terminal device is used as an example for description.

The centralized node may be a network element or device having a baseband signal processing function, or a device having a radio signal processing function for managing an access network (radio access network, RAN). The centralized node can complete baseband signal processing functions such as encoding, multiplexing, modulation, and spreading, can complete a function of processing signaling from the terminal device, can implement a function of performing local management and remote operation and maintenance on the terminal device, and can provide a clock synchronization function for the terminal device. The centralized node may be the access network device in the foregoing communication system or a functional module or a chip in the access network device.

In an example, the centralized node is the access network device. Some common examples of the access network device are a NodeB (NodeB, NB), an evolved NodeB (evolved NodeB, eNB or eNodeB), a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), and the like.

In another example, the centralized node is the functional module or the chip in the access network device. For example, the centralized node is a baseband unit (baseband unit, BBU) (which is also referred to as a building baseband unit (building baseband unit, BBU)) in the access network device (for example, a base station). For example, in a long term evolution LTE system or an evolved LTE (long term evolution advanced, LTE-A) system, the centralized node may be a baseband unit BBU in an evolved NodeB (evolved NodeB, eNB or e-NodeB). For another example, in a 5G NR system, the centralized node may be a baseband unit BBU in a next generation NodeB (next generation NodeB, gNB). Optionally, the centralized node may alternatively be a part of functional modules in the BBU. For example, in 5G, the BBU is divided into two parts: high-layer baseband processing (baseband high, BBH) and low-layer baseband processing (baseband low, BBL). The BBH and the BBL are connected through a fronthaul interface. In this case, the centralized node may be the BBH. In addition, in a cloud access network (cloud radio access network, CloudRAN) or open access network (open radio access network, ORAN) system, the centralized node may be a central unit (central unit, CU) (which is also referred to as a control unit), or may be a distributed unit (distributed unit, DU), or may be a combination structure of a central unit CU and a distributed unit DU.

The processing node may be a network element or a device having a baseband signal processing function. Optionally, the processing node further has a function of processing a radio signal (for example, an intermediate frequency signal or a radio frequency signal). The processing node may be the access network device in the foregoing communication system or a functional module or a chip in the access network device. When the processing node is implemented by using the access network device, the processing node is similar to the centralized node. For details, refer to the foregoing related descriptions of the centralized node.

In an example, when the processing node is implemented by using the functional module or the chip in the access network device, the processing node may include only a baseband signal processing function. For example, the processing node may be a BBU or a part of the BBU. For example, in 5G, the BBU is divided into two parts: high-layer baseband processing (baseband high, BBH) and low-layer baseband processing (baseband low, BBL). The BBL is usually deployed in or near an RU. The BBH and the BBL are connected through a fronthaul interface. In this case, the processing node may be the BBL.

In another example, when the processing node is implemented by using the functional module or the chip in the access network device, the processing node may include a function of a radio unit (radio unit, RU) (which is also referred to as a radio frequency unit) in the access network device and a function of a physical layer of a part of the BBU, for example, functions such as modulation, demodulation, layer mapping, Fourier transform (fast Fourier transform, FFT), and channel estimation/equalization. The radio unit RU may be a remote radio unit (remote radio unit, RRU) (which is also referred to as a remote radio frequency module) or a remote radio head (remote radio head, RRH), or may be an active antenna unit (active antenna unit, AAU) (that is, a processing unit integrated by an RRU (or an RRH) and an antenna), or may be a physical transmission reception point (transmission reception point, TRP). In addition, in a CU-DU architecture, the processing node may be a distributed unit (distributed unit, DU).

It should be understood that when the centralized node is a CU and the processing node is a DU, or when the centralized node is BBH and the processing node is BBL, the centralized node and the processing node are connected through a fronthaul interface. The fronthaul interface may be an interface defined in a conventional technology for a base station system to divide physical layers, for example, an interface in an enhanced common public radio interface (enhanced common public radio interface, eCPRI), a common public radio interface (common public radio interface, CPRI), or an open base station architecture (open base station architecture initiative, OBASI). This is not limited herein.

It should be understood that, in actual application, the centralized node and the processing node may alternatively be implemented by using other structures, and are not listed one by one herein. In this embodiment and subsequent embodiments, the centralized node and the processing node are used as examples for description.

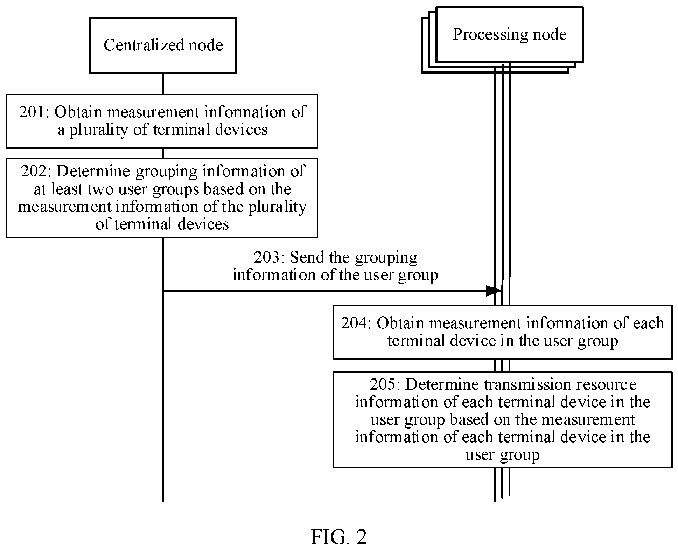

The following describes, with reference to FIG. 2, a main procedure of a resource scheduling method provided in this application.

FIG. 2 is a flowchart of the resource scheduling method according to this application. A centralized node and a processing node perform the following steps.

Step 201: The centralized node obtains measurement information of a plurality of terminal devices.

The measurement information indicates channel quality or a channel state of the terminal device. For example, the measurement information may be any one of reference signal received power (reference signal received power, RSRP), reference signal received quality (reference signal received quality, RSRQ), or a signal to interference plus noise ratio (signal to interference plus noise ratio, SINR). The measurement information may alternatively be other information reflecting the channel state.

It should be understood that the measurement information may be measured by the terminal device, or may be measured by the processing node. This is not limited herein. In an implementation, the measurement information is measured by the terminal device. The terminal device reports the measurement information to a processing node of a serving cell, and the centralized node obtains the measurement information from the processing node of the serving cell in which the terminal device is located. In another implementation, the measurement information is measured by the processing node. The processing node stores the measurement information, and the centralized node obtains the measurement information from the processing node. In another implementation, the measurement information is measured by the terminal device. The terminal device directly reports the measurement information to the centralized node. During actual application, any one of the foregoing implementations may be used. This is not limited herein.

The plurality of terminal devices are from at least one cell, and the at least one cell may be from a specific processing node, or may be from different processing nodes. The following separately provides descriptions.

In a possible implementation, the plurality of terminal devices are from a specific cell, to be specific, the plurality of terminal devices access a specific cell of a specific processing node. Optionally, the plurality of terminal devices may be a part of terminal devices in the cell. For example, the plurality of terminal devices are terminal devices located at a cell edge. For example, the centralized node obtains measurement information of three terminal devices, all the three terminal devices are from a cell 1, and all the three terminal devices are located at a cell edge of the cell 1. Optionally, the plurality of terminal devices may alternatively be all terminal devices in the cell. For example, the centralized node obtains measurement information of all terminal devices that access a specific cell.

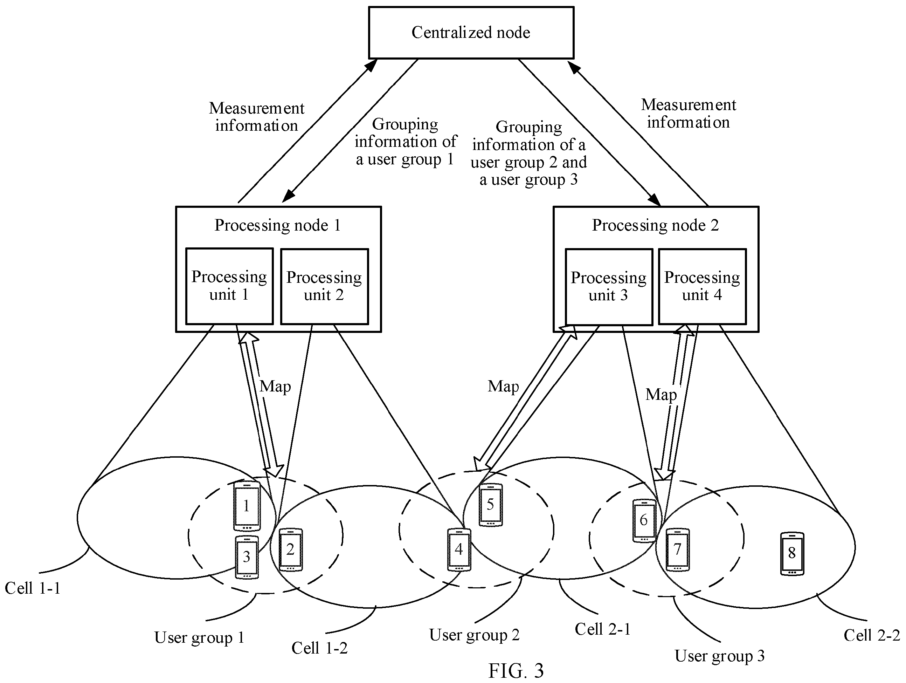

In another possible implementation, the plurality of terminal devices are from a plurality of cells, and the plurality of cells are cells that belong to a same processing node. Optionally, the plurality of terminal devices are terminal devices located at cell edges, or the plurality of terminal devices are terminal devices whose geographical locations are close. For example, as shown in FIG. 3, the centralized node obtains measurement information of three terminal devices in total: a terminal device 1, a terminal device 2, and a terminal device 3. The three terminal devices separately access two cells of a processing node 1. To be specific, the terminal device 1 and the terminal device 3 access a cell 1-1 and are located at an edge of the cell 1-1, the terminal device 2 accesses a cell 1-2 and is located at an edge of the cell 2, and geographical locations of the terminal device 1, the terminal device 2, and the terminal device 3 are close.

In another possible implementation, the plurality of terminal devices are from a plurality of cells, and the plurality of cells are cells that belong to different processing nodes. Optionally, the plurality of terminal devices are terminal devices located at cell edges, or the plurality of terminal devices are terminal devices whose geographical locations are close. For example, as shown in FIG. 3, the centralized node obtains measurement information of two terminal devices, and the two terminal devices respectively access a cell of a processing node 1 and a cell of a processing node 2. A terminal device 4 accesses a cell 1-2 of the processing node 1 and is located at an edge of the cell 1-2, a terminal device 5 accesses a cell 2-1 of the processing node 2 and is located at an edge of the cell 2-1, and geographical locations of the terminal device 4 and the terminal device 5 are close.

Step 202: The centralized node determines grouping information of at least two user groups based on the measurement information of the plurality of terminal devices.

The user group is a set including at least one terminal device. Different user groups include different terminal devices, and a same terminal device is grouped only into one user group. For example, the centralized node groups three terminal devices, namely, a terminal device 1, a terminal device 2, and a terminal device 3, into two user groups. A user group 1 includes the terminal device 1, and a user group 2 includes the terminal device 2 and the terminal device 3.

In addition, the grouping information of the user group indicates at least one terminal device included in the user group. For example, the grouping information of the user group includes an identifier of the user group and an identifier of the at least one terminal device included in the user group.

FIG. 3 is used as an example. A user group 1 includes the terminal device 1, the terminal device 2, and the terminal device 3, a user group 2 includes the terminal device 4 and the terminal device 5, and a user group 3 includes a terminal device 6 and a terminal device 7. In this example, the grouping information of the at least two user groups determined by the centralized node is shown in Table 1-1 below.

**Table 1-1**

| Identifier of a user group | Identifier of a terminal device |
|---|---|
| User group 1 | Terminal device 1, terminal device 2, and terminal device 3 |
| User group 2 | Terminal device 4 and terminal device 5 |
| User group 3 | Terminal device 6 and terminal device 7 |

In the example shown in Table 1-1, grouping information of the user group 1 includes an identifier of the user group 1, an identifier of the terminal device 1, an identifier of the terminal device 2, and an identifier of the terminal device 3, and it indicates that the user group 1 includes the terminal device 1, the terminal device 2, and the terminal device 3. Grouping information of the user group 2 includes an identifier of the user group 2, an identifier of the terminal device 4, and an identifier of the terminal device 5, and it indicates that the user group 2 includes the terminal device 4 and the terminal device 5. Grouping information of the user group 3 includes an identifier of the user group 3, an identifier of the terminal device 6, and an identifier of the terminal device 7, and it indicates that the user group 3 includes the terminal device 6 and the terminal device 7.

In a possible implementation, the centralized node determines interference information and/or correlation information based on the measurement information of the plurality of terminal devices, and then the centralized node determines the grouping information of the at least two user groups based on the interference information and/or the correlation information.

The interference information indicates an interference degree between channels of different terminal devices. A higher interference degree indicates greater impact caused by one channel on performance of the other channel when the channels of two terminal devices transmit data simultaneously. Therefore, when resource parameters of terminal devices that cause high mutual interference are determined, resource parameters that are respectively suitable for the two terminal devices need to be comprehensively considered, so that the two terminal devices use resource parameters with low interference. For example, space domain parameters and frequency domain parameters of terminal devices in a same group are configured to be staggered, to avoid interference enhancement caused by configuration of similar space domain parameters and similar frequency domain parameters. Therefore, two terminal devices with high interference need to be grouped into a same user group, and a same processing unit determines resource parameters of the two terminal devices with high interference. Therefore, when determining a proper resource parameter for the terminal device, the processing unit can also avoid performing data exchange with another processing unit. In addition, a lower interference degree indicates less impact caused by one channel on performance of the other channel when the channels of two terminal devices transmit data simultaneously. Because interference between the two terminal devices is low, even if similar resource parameters are configured, one terminal device may not have great impact on the other terminal device. Therefore, the two terminal devices with low interference need to be grouped into different user groups, and different processing units separately determine resource parameters of the two terminal devices with low interference, to facilitate load balancing of processing units in a system.

In addition, the correlation information indicates a correlation degree between channels of different terminal devices. A higher correlation degree (that is, a higher correlation) indicates that channel states of terminal devices are more similar, and a lower correlation degree (that is, a lower correlation) indicates that the channel states of the terminal devices are more different. If the channel states of the terminal devices are more similar, resource parameters that are respectively suitable for the two terminal devices need to be comprehensively considered. Therefore, the terminal devices need to be grouped into a same user group, and a same processing unit determines resource parameters of the two terminal devices with a high correlation, to avoid data exchange with another processing unit. If the channel states of the terminal devices are more different, the terminal devices may be grouped into different user groups, and different processing units separately determine resource parameters of the two terminal devices with a low correlation, to facilitate load balancing of processing units in a system.

In an implementation, in the at least two user groups determined by the centralized node, a correlation between any two terminal devices that belong to different user groups is less than a first threshold, and a correlation between any two terminal devices that belong to a same user group is greater than a second threshold. The first threshold is less than the second threshold. It may be understood as that the centralized node groups terminal devices with a high correlation into one user group, and groups terminal devices with a low correlation into different user groups.

In another implementation, in the at least two user groups determined by the centralized node, interference between any two terminal devices that belong to different user groups is less than a third threshold, and interference between any two terminal devices that belong to a same user group is greater than a fourth threshold. The third threshold is less than the fourth threshold. It may be understood as that the centralized node groups terminal devices with high interference degrees into one user group, and groups terminal devices with low interference degrees into different user groups.

In this embodiment, the centralized node groups the plurality of terminal devices, to obtain minimized inter-group interference and maximized intra-group interference of the at least two user groups, or a minimized inter-group correlation and a maximized intra-group correlation of the at least two user groups. Therefore, when determining transmission resource information of terminal devices in a same user group, only a channel state of a cell in which the terminal devices in the same user group are located needs to be considered, and a channel state of a cell in which a terminal device in another user group is located does not need to be considered.

Step 203: The centralized node sends grouping information of each user group to a processing node corresponding to the user group; and correspondingly, the processing node receives the grouping information of the user group from the centralized node.

The processing node includes at least one processing unit, and the processing unit is a functional module or a hardware module that is in the processing node and that is configured to calculate resource scheduling related information of a cell. In some scenarios, the processing unit is also referred to as a processing core. Usually, one cell corresponds to at least one processing unit, and different cells correspond to different processing units. It may be understood as that the at least one processing unit is jointly configured to calculate resource scheduling related information of one cell, and the at least one processing unit is not configured to calculate resource scheduling related information of another cell. For example, the processing node has two cells in total: a cell 1 and a cell 2. The cell 1 corresponds to a processing unit 1 and a processing unit 2, and the cell 2 corresponds to a processing unit 3. In this case, the processing unit 1 and the processing unit 2 are configured to calculate resource scheduling related information of the cell 1, and the processing unit 3 is configured to calculate the resource scheduling related information of the cell 1.

In a possible implementation, the centralized node can determine a processing unit corresponding to each of the at least two user groups, and then the centralized node separately sends, to a processing node in which the processing unit is located, grouping information of the user group corresponding to the processing unit.

Specifically, the centralized node can obtain attribute information of a processing unit corresponding to the cell in which the terminal device is located, and then the centralized node allocates a processing unit to each user group based on attribute information of each processing unit and the grouping information of the user group.

The attribute information of the processing unit includes at least one of the following: an identifier of the cell corresponding to the processing unit; an identifier of the processing node in which the processing unit is located; a processing capacity of the processing unit; a storage capacity of the processing unit; and a type of a parameter that can be processed by the processing unit. The type of the parameter supported by the processing unit for processing is physical resource allocation information (for example, a resource block (resource block, RB) or a stream resource), power allocation information, weight information, modulation symbol size (modulation code size, MCS) information, and the like.

Optionally, the centralized node obtains attribute information of a processing unit corresponding to a cell in which each terminal device in each user group is located, and then the centralized node matches, for each user group based on parameters such as a quantity of terminal devices included in each user group, and a processing capacity and a storage capacity of each processing unit, a processing unit that can support processing of resource scheduling related information of the user group. For example, the centralized node can determine, based on the grouping information of each user group, the quantity of terminal devices included in the user group, and then select, based on the quantity of terminal devices included in the user group, a processing unit whose processing capacity and storage capacity can meet a requirement for calculating transmission resource information of each terminal device in the user group as the processing unit corresponding to the user group. Because the attribute information of the processing unit includes the identifier of the processing node corresponding to the processing unit, after determining the processing unit corresponding to the user group, the centralized node can determine a specific processing node to which the grouping information of the user group is to be sent.

Optionally, different user groups correspond to different processing units. Grouping information of a same user group is sent only to one specific processing unit. In other words, a same processing unit calculates transmission resource information of a terminal device in one user group. This helps avoid data exchange between processing units.

In a possible implementation, when determining the processing unit corresponding to the user group, the centralized node may further generate a first correspondence. The first correspondence indicates a correspondence between each of the at least two user groups and a plurality of processing units, and the first correspondence includes an identifier of the user group and an identifier of the processing unit corresponding to the user group.

FIG. 3 is used as an example. If the centralized node determines three user groups, and determines to map the user group 1 to a processing unit 1 in the processing node 1, map the user group 2 to a processing unit 3 in the processing node 2, and map the user group 3 to a processing unit 4 in the processing node 2, the first correspondence may be shown in Table 2-1 below.

**Table 2-1**

| Identifier of a user group | Identifier of a processing unit |
|---|---|
| User group 1 | Processing unit 1 |
| User group 2 | Processing unit 3 |
| User group 3 | Processing unit 4 |

Optionally, the first correspondence further includes the identifier of the processing node, indicating the processing node to which the processing unit belongs. FIG. 3 is still used as an example. The first correspondence may be shown in Table 2-2 below.

**Table 2-2**

| Identifier of a user group | Identifier of a processing unit | Identifier of a processing node |
|---|---|---|
| User group 1 | Processing unit 1 | Processing node 1 |
| User group 2 | Processing unit 3 | Processing node 2 |
| User group 3 | Processing unit 4 | Processing node 2 |

Optionally, the centralized node determines the first correspondence based on the grouping information of the at least two user groups and attribute information of a processing unit corresponding to each cell. The centralized node separately sends, based on the first correspondence, the grouping information of the user group corresponding to the processing unit and the identifier of the processing unit to the processing node in which the processing unit is located.

For example, as shown in FIG. 3 and Table 2-1, the centralized node determines three user groups, and determines to map the user group 1 to the processing unit 1 in the processing node 1, map the user group 2 to the processing unit 3 in the processing node 2, and map the user group 3 to the processing unit 4 in the processing node 2. The centralized node sends the grouping information of the user group 1 to the processing node 1. In addition, the centralized node sends the grouping information of the user group 2 and an identifier of the processing unit 3 to the processing node 2. In addition, the centralized node sends the grouping information of the user group 3 and an identifier of the processing unit 4 to the processing node 2.

In this implementation, the centralized node stores a correspondence between a user group and a processing unit. This helps improve efficiency of distributing grouping information of the user group by the centralized node. In addition, when a terminal device included in the user group changes, the centralized node updates the grouping information of the user group for the processing unit.

Step 204: The processing node obtains measurement information of each terminal device in the user group.

The processing node can determine, based on the received grouping information of the user group, the terminal device included in the user group, and then the processing node obtains the measurement information of each terminal device in the user group. It should be understood that the processing node may obtain measurement information currently measured by the terminal device. The measurement information in step 204 may be the same as or different from the measurement information in step 201.

Step 205: The processing node determines transmission resource information of each terminal device in the user group based on the measurement information of each terminal device in the user group.

Specifically, the processing node can control, based on the received grouping information of the user group and the identifier of the processing unit, the processing unit that is in the processing node and that corresponds to the user group to determine the transmission resource information of each terminal device in the user group. The transmission resource information indicates a resource parameter used when the serving cell in which the terminal device is located and a cooperating cell jointly transmit data to the terminal device.

The user group 1 in the example shown in FIG. 3 is used as an example. The processing node 1 receives the grouping information of the user group 1 and the identifier of the processing unit 1. The user group 1 includes the terminal device 1, the terminal device 2, and the terminal device 3. In this case, the processing unit 1 in the processing node 1 determines transmission resource information of the terminal device 1, the terminal device 2, and the terminal device 3.

For example, the resource parameter indicated by the transmission resource information includes at least one of the following:
physical resource allocation information, indicating physical resources allocated to different terminal devices in one user group, where the physical resource may be a resource block (resource block, RB) resource, a physical bearer resource, a stream resource, or the like, which is not limited herein;
power allocation information, indicating transmit power and/or receive power allocated to different terminal devices in one user group;
weight information, indicating an antenna weight for transmitting a signal to the terminal device and/or an antenna weight for receiving a signal from the terminal device; and
modulation symbol size (modulation code size, MCS) information, indicating a modulation scheme of service data transmitted by the terminal device.

Optionally, the processing unit corresponding to the grouping information of the user group may be further divided into a plurality of subunits based on a determined type of the transmission resource parameter, and each subunit processes one type of transmission resource parameter. The different subunits may calculate transmission resource parameters of the terminal devices in series, or may calculate transmission resource parameters of the terminal devices in parallel. This is not limited in this application.

In an example, a subunit 1 in the processing unit calculates physical resource parameters such as RB allocation, stream allocation, and a quantity of streams; a subunit 2 in the processing unit calculates transmit and receive power of the terminal device; a subunit 3 in the processing unit calculates weights of transmit and receive antennas; and a subunit 4 in the processing unit selects and calculates an MCS based on an SINR.

Optionally, after the processing unit determines the transmission resource information of each terminal device, each processing unit further transmits the transmission resource information of the terminal device to a transceiver unit corresponding to a serving cell corresponding to the terminal device and a transceiver unit corresponding to the cooperating cell.

For example, the transmission resource information includes a first resource parameter of the transceiver unit corresponding to the serving cell and a second resource parameter of the transceiver unit corresponding to the cooperating cell. Specifically, the processing node controls the processing unit to transmit the first resource parameter to the transceiver unit corresponding to the serving cell, and transmit the second resource parameter to the transceiver unit corresponding to the cooperating cell. The first resource parameter and the second resource parameter are used by the processing node to jointly transmit data to the terminal device with the transceiver unit of the serving cell and the transceiver unit of the cooperating cell.

For example, the terminal device 1 in the user group 1 shown in FIG. 3 is used, and the transmission resource information of the terminal device 1 indicates that the cell 1-1 and the cell 1-2 perform joint transmission and reception. The transmission resource information of the terminal device 1 determined by the processing unit 1 includes a first resource parameter of the cell 1-1 (that is, the serving cell) and a second resource parameter of the cell 1-2 (that is, the cooperating cell). In this case, the processing unit 1 transmits the first resource parameter to a transceiver unit responsible for the cell 1-1, and transmits the second resource parameter to a transceiver unit responsible for the cell 1-2, so that the processing node 1, the cell 1-1, and the cell 1-2 can jointly perform data transmission with the terminal device 1.

In this application, the centralized node can group the plurality of terminal devices into the at least two user groups, determine processing unit information corresponding to each user group, and send user grouping information to a processing node in which a corresponding processing unit is located, to trigger the processing node to determine the transmission resource information of each terminal device based on the measurement information of the terminal device in the user group, and the processing node does not need to obtain information about a terminal device in another user group. Because information exchange between processing units is reduced, a processing delay of coordinated multipoint transmission/reception can be reduced, to improve performance of coordinated multipoint transmission/reception.

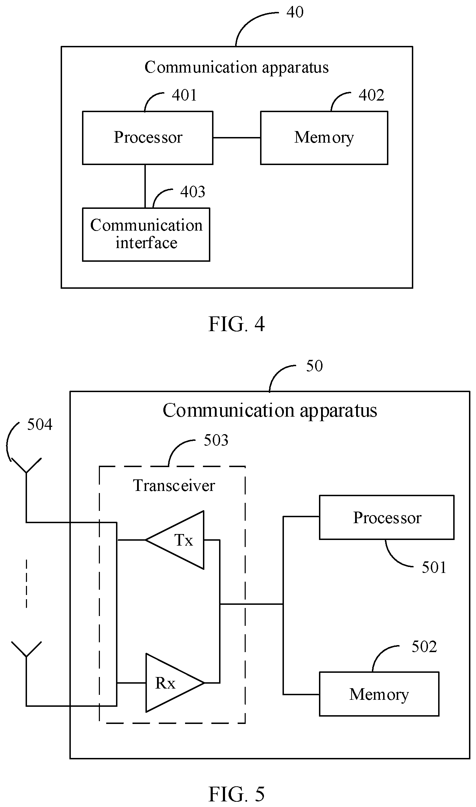

FIG. 4 is a diagram of a structure of a communication apparatus 40 according to this application. It should be understood that the centralized node in the method embodiment corresponding to FIG. 2 may be based on the structure of the communication apparatus 40 shown in FIG. 4 in this embodiment. The communication apparatus 40 may be a network element or a device having a baseband signal processing function, or a device having a radio signal processing function for managing an access network RAN. The communication apparatus 40 may be an access network device or a part of functional modules or chips in the access network device. For details, refer to the foregoing related descriptions corresponding to FIG. 1B. Details are not described herein again.

Specifically, the communication apparatus 40 includes at least one processor 401, at least one memory 402, and at least one communication interface 403. The processor 401, the memory 402, and the communication interface 403 are connected via a connection apparatus. The connection apparatus may include various types of interfaces, transmission cables, buses, or the like. This is not limited in this embodiment.

The memory 402 is mainly configured to store a software program and data. For example, the memory 402 stores grouping information of a user group, and the grouping information of the user group includes an identifier of the user group and an identifier of at least one terminal device included in the user group. For another example, the memory 402 stores a first correspondence, the first correspondence indicates a correspondence between each of at least two user groups and a processing unit corresponding to the user group, and the first correspondence includes an identifier of the user group and an identifier of the processing unit corresponding to the user group.

The memory 402 may exist independently, and is connected to the processor 401. Optionally, the memory 402 may be integrated with the processor 401, for example, integrated into one or more chips. The memory 402 can store program code for performing the technical solutions in embodiments of this application, and the processor 401 controls the execution. Various types of executed computer program code may also be considered as drivers of the processor 401. It should be understood that FIG. 4 in this embodiment shows only one memory and one processor. However, during actual application, the communication apparatus 40 may include a plurality of processors or a plurality of memories. This is not specifically limited herein. In addition, the memory 402 may also be referred to as a storage medium, a storage device, or the like. The memory 402 may be a storage element (that is, an on-chip storage element) located on the same chip as the processor, or an independent storage element. This is not limited in this embodiment of this application.

In this embodiment, the communication interface 403 is configured to receive a digital baseband signal or a digital intermediate frequency signal from a radio frequency unit, and provide the digital baseband signal or the digital intermediate frequency signal for the processor 401, so that the processor 401 further processes the digital baseband signal or the digital intermediate frequency signal, for example, performs demodulation processing and decoding processing. The communication interface 403 may further send the digital baseband signal or the digital intermediate frequency signal to the radio frequency unit, so that the radio frequency unit converts the modulated digital baseband signal or the digital intermediate frequency signal into a radio frequency signal, and sends the radio frequency signal through one or more antennas. For example, the communication interface 403 may be a fronthaul interface such as an enhanced common public radio interface eCPRI or a common public radio interface CPRI.

Optionally, the communication interface 403 is further connected to an optical module (not shown in the figure), and the optical module is configured to convert a digital baseband signal generated by the communication apparatus 40 into an optical signal for transmission by using an optical fiber. The optical module is further configured to receive an optical signal from another device (for example, a processing node), and convert the foregoing optical signal into the digital baseband signal.

It should be understood that a combination structure of the communication interface 403 and the optical module may also be referred to as a transceiver unit, a transceiver, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitter, a transmitting machine, a transmitter circuit, or the like.

In addition, the processor 401 is mainly configured to process a communication protocol and communication data, control an entire network device, execute a software program, and process data of the software program, for example, configured to support the communication apparatus 40 in performing an action described in the foregoing embodiments. The communication apparatus 40 may include a baseband processor and a central processing unit. The baseband processor is mainly configured to process a communication protocol and communication data. The central processing unit is mainly configured to control the whole communication apparatus 40, execute a software program, and process data of the software program. Functions of the baseband processor and the central processing unit may be integrated into the processor 401 in FIG. 4. A person skilled in the art may understand that the baseband processor and the central processing unit may alternatively be processors independent of each other, and are interconnected by using a technology such as a bus. A person skilled in the art may understand that the communication apparatus 40 may include a plurality of baseband processors to adapt to different network standards, the communication apparatus 40 may include a plurality of central processing units to enhance a processing capability thereof, and components in the communication apparatus 40 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

Specifically, the communication apparatus 40 performs the following steps based on the program code stored in the memory 402.

The processor 401 is configured to control the communication interface 403 to obtain measurement information of a plurality of terminal devices, where the measurement information indicates channel quality of the terminal device; and determine grouping information of at least two user groups based on the measurement information of the plurality of terminal devices, where grouping information of each user group indicates at least one terminal device included in the user group, and different user groups include different terminal devices. The communication interface 403 is configured to send the grouping information of the user group to a processing node.

Optionally, in the at least two user groups, a correlation degree between channels of any two terminal devices that belong to different user groups is less than a first threshold, and a correlation degree between channels of any two terminal devices that belong to a same user group is greater than a second threshold; and/or an interference degree between channels of any two terminal devices that belong to different user groups is less than a third threshold, and an interference degree between channels of any two terminal devices that belong to a same user group is greater than a fourth threshold.

In a possible implementation, the processor 401 is specifically configured to determine interference information and/or correlation information based on the measurement information of the plurality of terminal devices, where the interference information indicates an interference degree between channels of different terminal devices, and the correlation information indicates a correlation degree between channels of different terminal devices; and determine the grouping information of the at least two user groups based on the interference information and/or the correlation information.

Optionally, the grouping information of each user group includes an identifier of the user group and an identifier of the at least one terminal device included in the user group.

In a possible implementation, the processor 401 is specifically configured to determine a first correspondence based on the grouping information of the at least two user groups, where the first correspondence indicates a correspondence between each of the at least two user groups and the processing unit corresponding to the user group, and the first correspondence includes an identifier of the user group and an identifier of the processing unit corresponding to the user group.

In a possible implementation, the processor 401 is specifically configured to separately send, based on the first correspondence, the grouping information of the user group corresponding to the processing unit and the identifier of the processing unit to the processing node in which the processing unit is located.

In a possible implementation, the processor 401 is specifically configured to obtain attribute information of the processing unit corresponding to the cell in which the terminal device is located; and determine the first correspondence based on the grouping information of the at least two user groups and attribute information of a processing unit corresponding to each cell.

For other details, refer to the method of the centralized node in the embodiment corresponding to FIG. 2. Details are not described herein again.

FIG. 5 is a diagram of a structure of another communication apparatus 50 according to this application. It should be understood that the processing node in the method embodiment corresponding to FIG. 2 may be based on the structure of the communication apparatus 50 shown in FIG. 5 in this embodiment.

The communication apparatus 50 includes at least one processor 501, at least one memory 502, at least one transceiver 503, and one or more antennas 504. The processor 501 includes at least one processing unit, and there is a correspondence (for example, the first correspondence described above) between the processing unit and a user group.

The processor 501, the memory 502, and the transceiver 503 are connected via a connection apparatus, and the antenna 504 is connected to the transceiver 503. The connection apparatus may include various types of interfaces, transmission cables, buses, or the like. This is not limited in this embodiment.

The memory 502 is mainly configured to store a software program and data. The memory 502 may exist independently, and is connected to the processor 501. Optionally, the memory 502 may be integrated with the processor 501, for example, integrated into one or more chips. The memory 502 can store program code for performing the technical solutions in embodiments of this application, and the processor 501 controls the execution. Various types of executed computer program code may also be considered as drivers of the processor 501. It should be understood that FIG. 5 in this embodiment shows only one memory and one processor. However, during actual application, the communication apparatus 50 may include a plurality of processors or a plurality of memories. This is not specifically limited herein. In addition, the memory 502 may also be referred to as a storage medium, a storage device, or the like. The memory 502 may be a storage element (that is, an on-chip storage element) located on the same chip as the processor, or an independent storage element. This is not limited in this embodiment of this application.

In this embodiment, the transceiver 503 may be configured to support receiving or sending of a radio frequency signal between the communication apparatus 50 and a terminal device, and the transceiver 503 may be connected to the antenna 504. The transceiver 503 includes a transmitter Tx and a receiver Rx. Specifically, one or more antennas 504 may receive a radio frequency signal. The receiver Rx of the transceiver 503 is configured to receive the radio frequency signal from the antenna 504, and convert the radio frequency signal into a digital baseband signal or a digital intermediate frequency signal, so that the digital baseband signal or the digital intermediate frequency signal is transmitted to a centralized node, and the centralized node performs further processing, for example, demodulation processing and decoding processing, on the digital baseband signal or the digital intermediate frequency signal. In addition, the transmitter Tx of the transceiver 503 is further configured to receive a modulated digital baseband signal or digital intermediate frequency signal from the centralized node, convert the modulated digital baseband signal or digital intermediate frequency signal into a radio frequency signal, and send the radio frequency signal through the one or more antennas 504. Specifically, the receiver Rx may selectively perform one or more levels of down frequency mixing processing and analog-to-digital conversion processing on the radio frequency signal to obtain the digital baseband signal or the digital intermediate-frequency signal. A sequence of the down frequency mixing and the analog-to-digital conversion processing is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

It should be understood that the transceiver 503 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitter, a transmitting machine, a transmitter circuit, or the like.

In addition, the processor 501 is mainly configured to process a communication protocol and communication data, execute a software program, and process data of the software program, for example, configured to support the communication apparatus 50 in performing an action described in the foregoing embodiments. In a possible implementation, the communication apparatus 50 is configured to perform the method in the embodiment corresponding to FIG. 2.

Specifically, when the communication apparatus 50 performs the method in the embodiment corresponding to FIG. 2, the transceiver 503 receives grouping information of at least one user group from a centralized node, where the grouping information of the user group indicates a terminal device that belongs to the user group, each user group includes at least one terminal device, and different user groups include different terminal devices; and the processor 501 obtains measurement information of the terminal device in the user group, and determines transmission resource information of the terminal device in the user group based on the measurement information of the terminal device in the user group, where the transmission resource information indicates a resource parameter used when a serving cell in which the terminal device is located and a cooperating cell jointly transmit data to the terminal device.

Optionally, in the at least two user groups, a correlation degree between channels of any two terminal devices that belong to different user groups is less than a first threshold, and a correlation degree between channels of any two terminal devices that belong to a same user group is greater than a second threshold; and/or an interference degree between channels of any two terminal devices that belong to different user groups is less than a third threshold, and an interference degree between channels of any two terminal devices that belong to a same user group is greater than a fourth threshold.

Optionally, the grouping information of each user group includes an identifier of the user group and an identifier of the at least one terminal device included in the user group.

In a possible implementation, a processing unit corresponding to the user group in the processor 501 determines the transmission resource information of the terminal device in the user group based on the measurement information of the terminal device in the user group.

In a possible implementation, the transceiver 503 is further configured to receive, from the centralized node, an identifier of a processing unit corresponding to each of the at least one user group.

In a possible implementation, the transmission resource information includes a first resource parameter of a transceiver unit corresponding to the serving cell and a second resource parameter of a transceiver unit corresponding to the cooperating cell. The transceiver 503 includes a transceiver unit corresponding to the serving cell and a transceiver unit corresponding to the cooperating cell. The processing unit corresponding to the user group in the processor 501 transmits the first resource parameter to the transceiver unit corresponding to the serving cell, and transmit the second resource parameter to the transceiver unit corresponding to the cooperating cell, where the first resource parameter and the second resource parameter are used by the processing node to jointly transmit data to the terminal device with the transceiver unit of the serving cell and the transceiver unit of the cooperating cell.

For other details, refer to the method of the processing node in the embodiment corresponding to FIG. 2. Details are not described herein again.

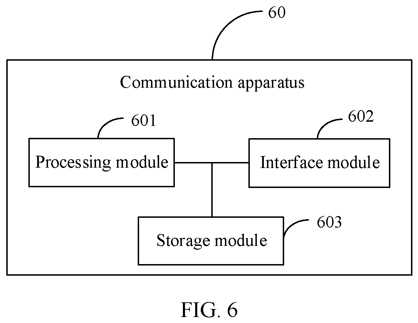

As shown in FIG. 6, this application further provides a communication apparatus 60. The communication apparatus 60 may be a centralized node or a processing node, or may be a component (for example, an integrated circuit or a chip) of the centralized node or the processing node. The communication apparatus 60 may alternatively be another communication module configured to implement the method in the method embodiment of this application.

The communication apparatus 60 may include a processing module 601 (or referred to as a processing unit). Optionally, the communication apparatus may further include an interface module 602 (or referred to as a transceiver unit or a transceiver module) and a storage module 603 (or referred to as a storage unit). The interface module 602 is configured to implement communication with another device. The interface module 602 may be, for example, a transceiver module or an input/output module.

In a possible design, one or more modules in FIG. 6 may be implemented by one or more processors, or may be implemented by one or more processors and memories, or may be implemented by one or more processors and transceivers, or may be implemented by one or more processors, memories, and transceivers. This is not limited in embodiments of this application. The processor, the memory, and the transceiver may be disposed separately or may be integrated.

The communication apparatus 60 has a function of implementing the centralized node described in embodiments of this application. For example, the communication apparatus 60 includes a module, a unit, or a means (means) corresponding to the centralized node performing the steps related to the centralized node described in embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiment. Specifically, refer to the communication apparatus 40 in the embodiment corresponding to FIG. 4.

Alternatively, the communication apparatus 60 has a function of implementing the processing node described in embodiments of this application. For example, the communication apparatus 60 includes a module, a unit, or a means (means) corresponding to the processing node performing the steps related to the processing node described in embodiments of this application. The function, the unit, or the means (means) may be implemented by software or hardware, or may be implemented by hardware executing corresponding software, or may be implemented by a combination of software and hardware. For details, refer to the corresponding descriptions in the foregoing corresponding method embodiment. Specifically, refer to the communication apparatus 50 in the embodiment corresponding to FIG. 5.

In addition, this application provides a computer program product. The computer program product includes one or more computer instructions. When the computer program instructions are loaded and executed on a computer, all or some of the procedures or functions according to embodiments of this application are generated. For example, the method related to the centralized node in FIG. 2 is implemented. For another example, the method related to the processing node in FIG. 2 is implemented. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the centralized node in FIG. 2.

In addition, this application further provides a computer-readable storage medium. The storage medium stores a computer program, and the computer program is executed by a processor to implement the method related to the processing node in FIG. 2.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical characteristics thereof. However, these modifications or replacements do not make essence of the corresponding technical solutions depart from the spirit and the scope of the technical solutions in embodiments of this application.

## Claims

1. A resource scheduling method, comprising:
obtaining, by a centralized node, measurement information of a plurality of terminal devices, wherein the measurement information indicates channel quality of the terminal device;
determining, by the centralized node, grouping information of at least two user groups based on the measurement information of the plurality of terminal devices, wherein grouping information of each user group indicates at least one terminal device comprised in the user group, and different user groups comprise different terminal devices; and
sending, by the centralized node, the grouping information of the user group to a processing node.

2. The method according to claim 1, wherein in the at least two user groups, a correlation degree between channels of any two terminal devices that belong to different user groups is less than a first threshold, and a correlation degree between channels of any two terminal devices that belong to a same user group is greater than a second threshold; and/or an interference degree between channels of any two terminal devices that belong to different user groups is less than a third threshold, and an interference degree between channels of any two terminal devices that belong to a same user group is greater than a fourth threshold.

3. The method according to claim 2, wherein determining, by the centralized node, the grouping information of the at least two user groups based on the measurement information of the plurality of terminal devices comprises:
determining, by the centralized node, interference information and/or correlation information based on the measurement information of the plurality of terminal devices, wherein the interference information indicates an interference degree between channels of different terminal devices, and the correlation information indicates a correlation degree between channels of different terminal devices; and
determining, by the centralized node, the grouping information of the at least two user groups based on the interference information and/or the correlation information.

4. The method according to any one of claims 1 to 3, wherein the grouping information of each user group comprises an identifier of the user group and an identifier of the at least one terminal device comprised in the user group.

5. The method according to any one of claims 1 to 4, wherein the processing node comprises a processing unit corresponding to the user group, a same user group corresponds to one processing unit in the processing node, and the processing unit comprises a processing unit corresponding to a cell in which the terminal device is located.

6. The method according to claim 5, wherein the method further comprises:
determining, by the centralized node, a first correspondence based on the grouping information of the at least two user groups, wherein the first correspondence indicates a correspondence between each of the at least two user groups and a processing unit corresponding to the user group, and the first correspondence comprises an identifier of the user group and an identifier of the processing unit corresponding to the user group.

7. The method according to claim 6, wherein sending, by the centralized node, the grouping information of the user group to the processing node comprises:
separately sending, by the centralized node based on the first correspondence, the grouping information of the user group corresponding to the processing unit and the identifier of the processing unit to the processing node in which the processing unit is located.

8. The method according to claim 6 or 7, wherein the method further comprises:
obtaining, by the centralized node, attribute information of the processing unit corresponding to the cell in which the terminal device is located; and
determining, by the centralized node, the first correspondence based on the grouping information of the at least two user groups comprises:
determining, by the centralized node, the first correspondence based on the grouping information of the at least two user groups and attribute information of a processing unit corresponding to each cell.

9. The method according to claim 8, wherein the attribute information of the processing unit comprises at least one of the following:
an identifier of the cell corresponding to the processing unit;
an identifier of the processing node in which the processing unit is located;
a processing capacity of the processing unit;
a storage capacity of the processing unit; and
a type of a parameter that can be processed by the processing unit.

10. A resource scheduling method, comprising:
receiving, by a processing node, grouping information of at least one user group from a centralized node, wherein the grouping information of the user group indicates a terminal device that belongs to the user group, each user group comprises at least one terminal device, and different user groups comprise different terminal devices;
obtaining, by the processing node, measurement information of the terminal device in the user group; and
determining, by the processing node, transmission resource information of the terminal device in the user group based on the measurement information of the terminal device in the user group, wherein the transmission resource information indicates a resource parameter used when a serving cell in which the terminal device is located and a cooperating cell jointly transmit data to the terminal device.

11. The method according to claim 10, wherein in the at least two user groups, a correlation degree between channels of any two terminal devices that belong to different user groups is less than a first threshold, and a correlation degree between channels of any two terminal devices that belong to a same user group is greater than a second threshold; and/or an interference degree between channels of any two terminal devices that belong to different user groups is less than a third threshold, and an interference degree between channels of any two terminal devices that belong to a same user group is greater than a fourth threshold.

12. The method according to claim 10 or 11, wherein grouping information of each user group comprises an identifier of the user group and an identifier of the at least one terminal device comprised in the user group.

13. The method according to any one of claims 10 to 12, wherein the processing node comprises a processing unit corresponding to the user group, a same user group corresponds to one processing unit in the processing node, and the processing unit comprises a processing unit corresponding to the cell in which the terminal device is located.

14. The method according to claim 13, wherein determining, by the processing node, the transmission resource information of the terminal device in the user group based on the measurement information of the terminal device in the user group comprises:
determining, by the processing node, the transmission resource information of the terminal device in the user group based on the measurement information of the terminal device in the user group through the processing unit corresponding to the user group.

15. The method according to claim 14, wherein the method further comprises:
receiving, by the processing node from the centralized node, an identifier of a processing unit corresponding to each of the at least one user group.

16. The method according to any one of claims 13 to 15, wherein the transmission resource information comprises a first resource parameter of a transceiver unit corresponding to the serving cell and a second resource parameter of a transceiver unit corresponding to the cooperating cell; and
the method further comprises:
controlling, by the processing node, the processing unit to transmit the first resource parameter to the transceiver unit corresponding to the serving cell, and transmit the second resource parameter to the transceiver unit corresponding to the cooperating cell, wherein the first resource parameter and the second resource parameter are used by the processing node to jointly transmit data to the terminal device with the transceiver unit of the serving cell and the transceiver unit of the cooperating cell.

17. A communication apparatus, comprising a processor and a memory, wherein
the memory stores a computer program; and
the processor invokes the computer program, to cause the communication apparatus to perform the method according to any one of claims 1 to 9.

18. A communication apparatus, comprising a processor and a memory, wherein
the memory stores a computer program; and
the processor invokes the computer program, to cause the communication apparatus to perform the method according to any one of claims 10 to 16.

19. A computer-readable storage medium, storing instructions, wherein when the instructions are run on a computer, the computer is caused to perform the method according to any one of claims 1 to 9, or perform the method according to any one of claims 10 to 16.
